(19) **Europäisches Patentamt / European Patent Office / Office européen des brevets**

(11) **EP 4 302 148 B1**

(12) **FASCICULE DE BREVET EUROPEEN**

(45) Date de publication et mention de la délivrance du brevet:
**24.12.2025   Bulletin 2025/52**

(21) Numéro de dépôt: **22712968.1**

(22) Date de dépôt: **04.03.2022**

(51) Classification Internationale des Brevets (IPC):
**G02B 26/06** *(2006.01)*      **G02B 26/08** *(2006.01)*
**G02B 27/00** *(2006.01)*

(52) Classification Coopérative des Brevets (CPC):
**G02B 27/0068; G02B 26/06; G02B 26/0825**

(86) Numéro de dépôt international:
**PCT/FR2022/050394**

(87) Numéro de publication internationale:
**WO 2022/185020 (09.09.2022 Gazette 2022/36)**

(54) **SYSTEME DE COMPENSATION DE LA DISTORSION D'UN FRONT D'ONDE D'UN RAYONNEMENT LUMINEUX INCIDENT**

SYSTEM ZUR KOMPENSATION DER VERZERRUNG EINER WELLENFRONT EINES EINFALLENDEN LICHTSTRAHLS

SYSTEM FOR COMPENSATING FOR THE DISTORTION OF A WAVEFRONT OF AN INCIDENT LIGHT BEAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.03.2021   FR 2102127**

(43) Date de publication de la demande:
**10.01.2024   Bulletin 2024/02**

(73) Titulaire: **Cailabs**
**35000 Rennes (FR)**

(72) Inventeur: **LABROILLE, Guillaume**
**35000 RENNES (FR)**

(74) Mandataire: **IP Trust**
**2, rue de Clichy**
**75009 Paris (FR)**

(56) Documents cités:
• **MATA CALVO RAMON ET AL: "Alternative passive fiber coupling system based on multi-plane light conversion for satellite-to-ground communications", FREE-SPACE LASER COMMUNICATIONS XXXII, 9 March 2020 (2020-03-09), pages 25, XP055863395, ISBN: 978-1-5106-3308-7, DOI: 10.1117/12.2546076**

• **SONG HAO ET AL: "Simultaneous Turbulence Mitigation and Mode Demultiplexing using one MPLC in a Two-Mode 200-Gbit/s Free-Space OAM-Multiplexed Link", 2020 OPTICAL FIBER COMMUNICATIONS CONFERENCE AND EXHIBITION (OFC), OSA, 8 March 2020 (2020-03-08), pages 1 - 3, XP033767485, DOI: 10.1364/OFC.2020.W1G.3**

• **SONG HAOQIAN ET AL: "Experimental Mitigation of Atmospheric Turbulence Effect Using Pre-Signal Combining for Uni- and Bi-Directional Free-Space Optical Links With Two 100-Gbit/s OAM-Multiplexed Channels", JOURNAL OF LIGHTWAVE TECHNOLOGY, IEEE, USA, vol. 38, no. 1, 1 January 2020 (2020-01-01), pages 82 - 89, XP011763690, ISSN: 0733-8724, [retrieved on 20191231], DOI: 10.1109/ JLT.2019.2933460**

## Description

## DOMAINE DE L'INVENTION

L'invention concerne un système de compensation de la distorsion du front d'onde d'un rayonnement lumineux. Cette distorsion peut trouver son origine dans les perturbations atmosphériques lors d'une communication optique en espace libre. Plus généralement cette distorsion est provoquée par la propagation du rayonnement lumineux dans son milieu. L'invention peut trouver une application, notamment, dans le domaine des télécommunications, de la microscopie ou le domaine de l'imagerie médicale.

## ARRIERE PLAN TECHNOLOGIQUE DE L'INVENTION

La propagation d'un rayonnement lumineux en espace libre soumet ce rayonnement aux perturbations de l'atmosphère. Ces perturbations erratiques, dont la dynamique de variation est de l'ordre du kHz, conduisent à déformer ce rayonnement, ce qui affecte son front d'onde.

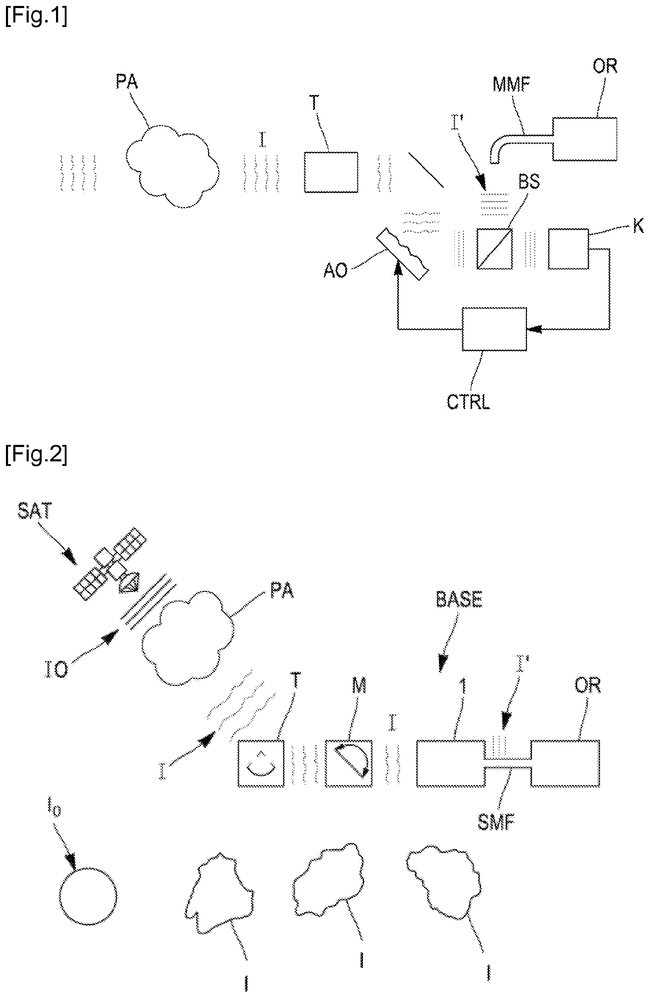

La figure 1 représente un montage de l'état de la technique visant à compenser la distorsion de phase que les perturbations atmosphériques PA induisent sur le front d'onde. Dans le montage de la figure 1, un télescope T collecte une partie du rayonnement lumineux incident I avec l'éventuelle assistance d'autres éléments optiques, pour la projeter sur un miroir déformable AO.

Un tel miroir déformable, dans son usage en optique adaptative, est pilotable pour localement (spatialement) déformer sa surface active et ajuster la phase du rayonnement lumineux incident. On peut de la sorte chercher à compenser la distorsion du front d'onde provoquée par les perturbations atmosphériques PA. A cet effet, le montage comprend, disposés dans une boucle de régulation, un analyseur de front d'onde K et un contrôleur du miroir déformable CTRL. La bande passante du miroir déformable AO, c'est-à-dire la fréquence avec laquelle il est possible de piloter sa déformation, est de l'ordre de 10kHZ ou quelques dizaines de kHz pour les systèmes couramment disponibles, soit un ordre de grandeur supérieur au phénomènes météorologiques qu'il est censé compenser.

Poursuivant la description du montage de l'état de la technique représenté sur la figure 1, une partie du rayonnement lumineux réfléchi I' par le miroir déformable AO, et donc dont la distorsion est réduite, est dirigée à l'aide d'un séparateur BS, sur un récepteur optique OR pour y être analysée, et plus généralement exploitée, par exemple par l'intermédiaire d'une fibre optique multimode MMF ou d'une fibre optique monomode. L'autre partie est dirigée par le séparateur BS vers l'analyseur de front d'onde K.

Ce montage de l'état de la technique présente de nombreuses limitations. En premier lieu, une partie relativement importante du rayonnement lumineux est redirigée par le séparateur BS pour être exploitée par l'analyseur de front d'onde de la boucle de rétroaction. Il s'ensuit que la puissance du rayonnement lumineux « utile », dirigé vers le récepteur optique OR, est réduite ce qui est dommageable pour la bonne exploitation de ce rayonnement lumineux. Cela est d'autant plus critique que, dans l'application des télécommunications optiques pris en exemple, la partie captée du rayonnement incident I peut être de très faible énergie. Toute déperdition d'énergie conduit à augmenter le rapport signal sur bruit de la transmission et donc la bande passante du système de télécommunication.

L'analyseur de front d'onde K constitue par ailleurs un équipement particulièrement complexe. Il comprend généralement une caméra, par exemple du type CCD, préparant des images numériques d'un rayonnement préalablement conditionné par une pluralité de pièces optiques. Les images sont ensuite traitées numériquement pour mesurer la phase spatiale du rayonnement lumineux perçu. Cette information de phase spatiale est décomposée par l'analyseur K ou par le contrôleur CTRL en déformations élémentaires applicables au miroir déformable en vue de compenser les aberrations du rayonnement incident I.

La complexité des traitements opérés par l'analyseur et/ou par le contrôleur du miroir déformable, notamment lorsque la caméra présente une résolution en pixels importante pour plus de précision de traitement, introduit nécessairement un délai de traitement dans la boucle de rétroaction, ce qui limite la précision de la compensation, voire rend cette compensation instable. D'une manière générale donc, les solutions conventionnelles de compensation de la distorsion d'un front d'onde sont peu satisfaisantes pour une communication visant un fort débit et peuvent être onéreuses.

Des approches nouvelles cherchent à éliminer l'analyseur de front d'onde conventionnel du montage représenté sur la figure 1.

On connaît ainsi le dispositif TILBA, de la société CAILABS, qui cherche à éliminer l'optique adaptative et sa boucle de régulation pour fournir un rayonnement utile le plus complet possible au récepteur optique. Ce dispositif décompose le rayonnement incident (qui, du fait des perturbations atmosphériques, présente une forme très dégradée et variable) dans un nombre limité de modes spatiaux. Cette décomposition peut être réalisée par un convertisseur de lumière multiplan et chaque mode décomposé est injecté dans une fibre monomode. On peut de la sorte collecter par l'intermédiaire des modes supérieurs du dispositif de décomposition les composantes spatiales contribuant à la forme « dégradée » du rayonnement incident. Cette approche est documentée dans l'article « Alternative passive fiber coupling system based on MPLC for satellite to ground conversion », Free space laser communication XXXII, du 9 mars 2020, page 25.

On connaît également du document Norris, B.R.M., Wei, J., Betters, C.H. et al. An all-photonic focal-plane wavefront sensor. Nat Commun 11, 5335 (2020), une solution visant à remplacer, dans le schéma de principe de la figure 1, l'analyseur de front d'onde par une lanterne photonique. Le rayonnement reçu en entrée par cette lanterne se propage, du côté de sa sortie, dans une section de fibre optique multicœur, chaque cœur propageant un mode particulier. Le motif spatial défini par l'intensité des rayonnements lumineux issus des cœurs, en sortie de cette fibre, est exploité pour piloter le miroir déformable AO. Plus précisément, ce document prévoit d'entrainer un réseau de neurones à l'aide de données d'entrainement associant un motif spatial déterminé (correspondant à une aberration déterminée du front d'onde) à une déformation déterminée du miroir déformable (visant à compenser l'aberration déterminée du front d'onde).

Cette proposition qui trouve une application dans l'article précité dans le domaine de l'astronomie souffre toutefois de nombreux problèmes. Tout d'abord, elle ne s'affranchit pas de l'utilisation d'une caméra. Par ailleurs, la lanterne photonique est un dispositif très instable, dont on ne maîtrise pas parfaitement la fonction de transfert, c'est-à-dire la manière précise selon laquelle le rayonnement lumineux incident est décomposé pour se propager dans les cœurs de la section de fibre optique multicœur. Cette fonction de transfert est particulièrement sensible à la température ou plus généralement à son environnement, si bien que la solution proposée par cet article nécessite d'entrainer régulièrement le réseau de neurones pour prendre en compte ces dérives. De plus, la lanterne formant un guide d'onde multimodes, le rayonnement incident qui s'y propage subit nécessairement une dispersion temporelle ce qui limiterait le débit de transmission si un tel dispositif était exploité dans le domaine des télécommunications. De plus, et d'une manière plus générale, la fonction de transfert de la lanterne photonique est dépendante de la longueur d'onde et de la polarisation du rayonnement incident. Lorsque les rayonnements fournis par une telle lanterne sont exploités pour piloter le miroir déformable AO il n'est pas possible de déterminer une unique configuration de ce miroir qui soit adaptée à toutes les longueurs d'onde et/ou à toutes les polarisations du rayonnement incident, lorsque ce rayonnement s'étend sur toute une gamme de longueurs d'onde/de polarisation. Cette dispersion chromatique constitue une barrière importante pour l'usage de cette solution dans de nombreux domaines, tels que celui des télécommunications qui traditionnellement exploite des techniques de transmission multiplexées en longueurs d'onde et/ou en polarisation.

La solution proposée par ce document est donc imparfaite.

Le document « Simultaneous Turbulence mitigation and mode demultiplexing using one MPLC in a Two-Mode 200-Gbit/s Free-Space OAM-Multiplexed Link " , 2020 OPTICAL FIBER COMMUNICATIONS CONFERENCE AND EXHIBITION (OFC), OSA, 8 mars 2020 (2020-03-08), pages 1-3, DOI: 10.1364/OFC.2020 .W1G.3" divulgue un système de communication optique mettant en œuvre un multiplexage spatial d'une pluralité de canaux de communication. Le document propose d'utiliser un MPLC pour à la fois démultiplexer les modes du faisceau transmis et réduire la diaphonie entre ces différents modes, cette diaphonie étant induite par les turbulences atmosphériques. Dans l'approche présentée dans le paragraphe 2 de ce document, des « motifs de phase » d'un MPLC sont ajustés en temps réel par l'intermédiaire d'un algorithme génétique pour réduire la diaphonie introduite par les turbulences atmosphériques dans le faisceau transmis lors du démultiplexage spatial du faisceau transmis.

## OBJET DE L'INVENTION

Un but de l'invention est de proposer une solution remédiant au moins en partie aux inconvénients précités.

## BREVE DESCRIPTION DE L'INVENTION

En vue de la réalisation de ce but, l'objet de l'invention propose un système de compensation de la distorsion conforme à la revendication 1.

Selon d'autres caractéristiques avantageuses et non limitatives de l'invention, prises seules ou selon toute combinaison techniquement réalisable :

- le rayonnement lumineux utile correspond à une partie au moins d'un unique rayonnement lumineux de sortie, cette partie étant spatialement séparée des autres rayonnements lumineux de sortie ;

- le rayonnement lumineux utile comprend une pluralité de rayonnements lumineux de sortie ;

- le dispositif photonique est configuré pour recombiner une partie au moins des rayonnements lumineux de sortie pour former le rayonnement lumineux utile ;

- la recombinaison d'une partie au moins des rayonnements lumineux de sortie est réalisée par au moins un dispositif de conversion de lumière multiplan ;

- la recombinaison d'une partie au moins des rayonnements lumineux de sortie est réalisée par un circuit intégré photonique ;

- le dispositif photonique comprend au moins une fibre optique monomode et est configuré pour y injecter le rayonnement lumineux utile ;

- le dispositif photonique comprend une pluralité de photodétecteurs configurée pour mesurer l'intensité et, optionnellement la phase relative, d'une partie au moins de la pluralité de rayonnements lumineux de sortie, la pluralité de photodétecteurs fournissant certaines au moins des caractéristiques modales ;

- les caractéristiques modales comprennent les grandeurs représentatives de l'intensité et de la phase relative des rayonnements lumineux de sortie et le contrôleur est configuré pour déterminer, à partir des caractéristiques modales, la phase du front d'onde de la partie du rayonnement lumineux corrigé ;

- le contrôleur met en œuvre un traitement visant à maximiser la puissance transmise dans le rayonnement lumineux utile ;

- la famille des modes cibles comprend une base de modes gaussiens et/ou une base de modes de Walsh ;

- le séparateur modal comprend une pluralité de dispositifs de conversion de lumière multiplan ;

- l'optique adaptative est commandée pour appliquer une déformation déterminée temporaire à la surface active, et les caractéristiques modales combinent les grandeurs représentatives des caractéristiques des rayonnements lumineux de sortie produits avec et sans la déformation temporaire de la surface active ;

- le dispositif photonique est optiquement couplé à un amplificateur optique du rayonnement lumineux utile.

Selon un autre aspect, l'invention concerne un système de communication optique mettant en œuvre un système de compensation tel que décrit précédemment et dans lequel la communication optique met en œuvre une technique de multiplexage en longueur d'onde et/ou en polarisation

**BREVE DESCRIPTION DES FIGURES**

D'autres caractéristiques et avantages de l'invention ressortiront de la description détaillée de l'invention qui va suivre en référence aux figures annexées sur lesquels :

[Fig. 1]
La figure 1 représente un montage de l'état de la technique visant à compenser la distorsion de phase que des perturbations atmosphériques induisent sur un front d'onde ;

[Fig. 2]
La figure 2 illustre un premier exemple d'utilisation d'un système de compensation conforme à l'invention dans le domaine des télécommunications

[Fig. 3]

[Fig. 3a]

[Fig. 3b]

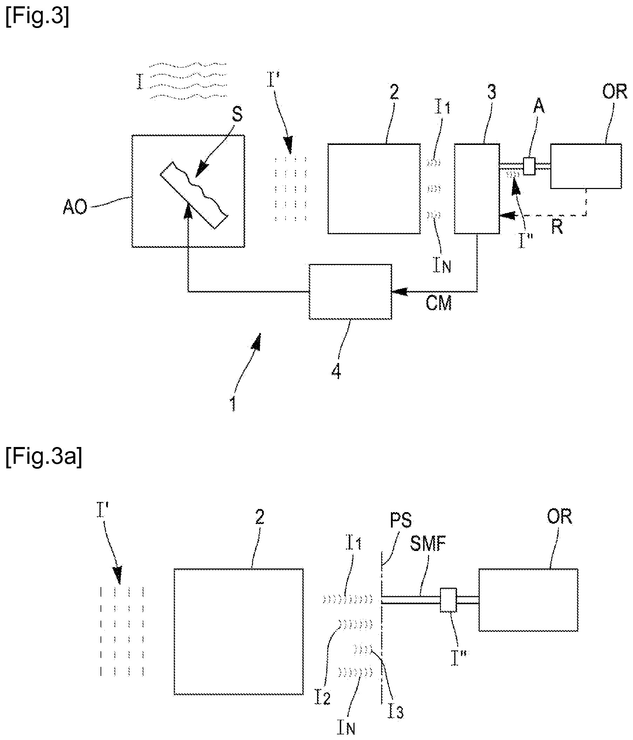

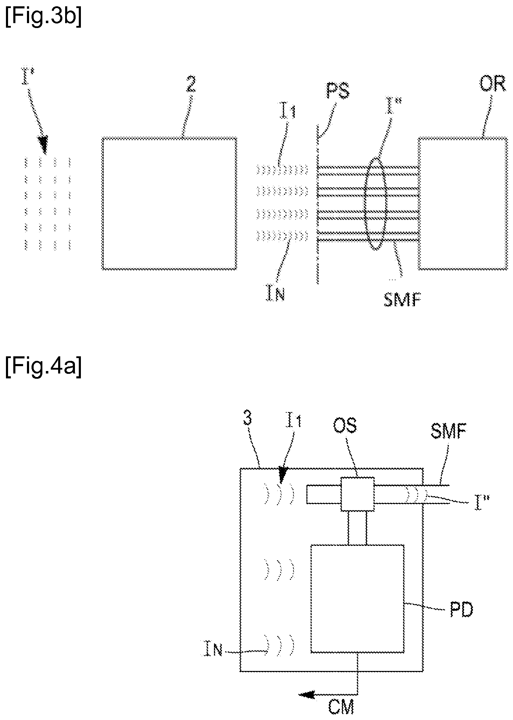

Les figures 3, 3a et 3b représentent un exemple d'un système de compensation conforme à l'invention ;

[Fig. 4a]

[Fig. 4b]

[Fig. 4c]
Les figures 4a à 4c représentent différents modes de mise en œuvre d'un dispositif photonique d'un système de compensation conforme à l'invention ;

[Fig. 5a]

[Fig. 5b]

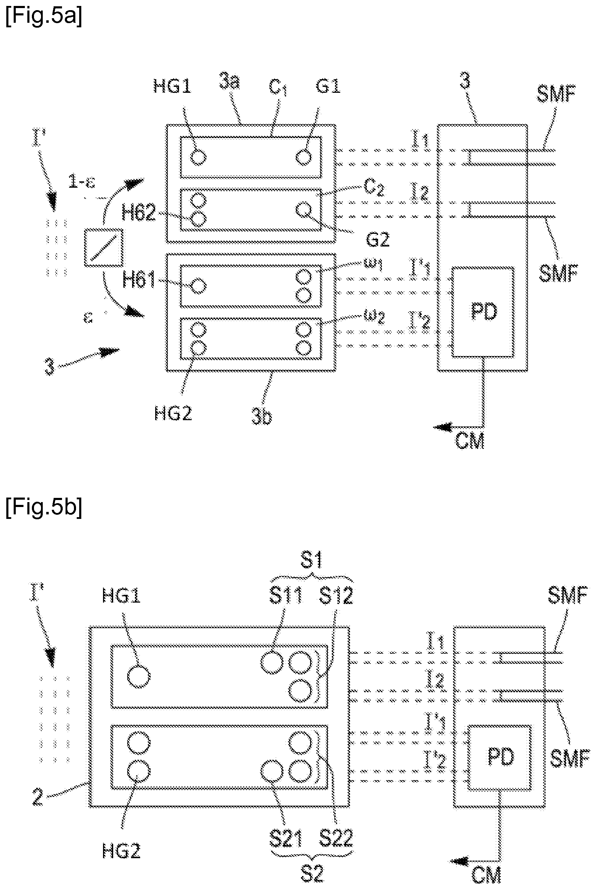

Les figures 5a, 5b représentent deux exemples d'un séparateur modal conforme à l'invention ;

[Fig. 6]

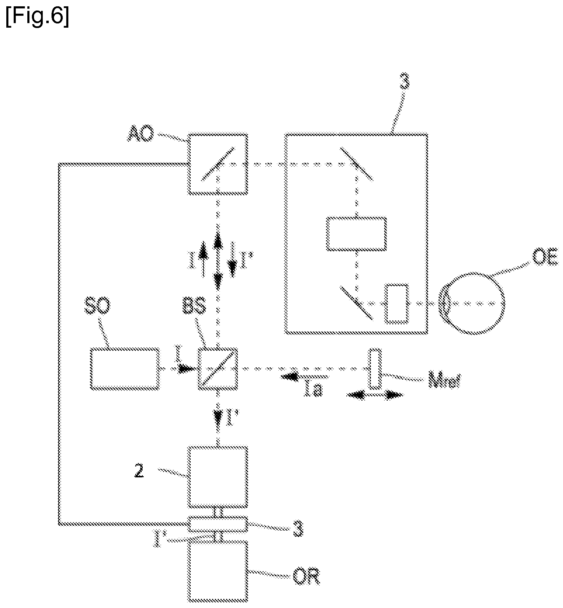

La figure 6 illustre un deuxième exemple d'utilisation d'un système de compensation conforme à l'invention dans le domaine de l'imagerie médicale ;

[Fig. 7]

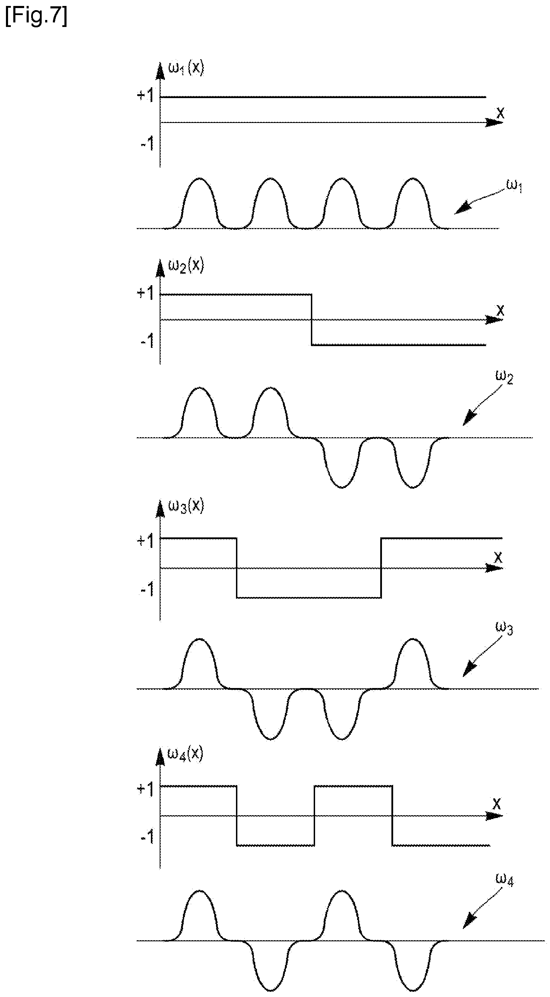

La figure 7 illustre la conception d'une famille de mode de Walsh.

**DESCRIPTION DETAILLEE DE L'INVENTION**

Par souci de clarté, on définit dans la présente demande un rayonnement lumineux comme un rayonnement formé d'au moins un mode du champ électromagnétique, chaque mode formant une distribution spatio-fréquentielle de l'amplitude, de la phase, et de la polarisation du champ. En conséquence, la modification ou la transformation de la phase du rayonnement lumineux désigne la modification ou la transformation spatio-fréquentielle de chacun des modes du rayonnement.
On désignera par « forme » d'un rayonnement la distribution transverse de l'amplitude et de la phase du mode ou la combinaison des distributions transverses d'amplitude et de phase des modes composant ce rayonnement.
En référence à la figure 2, on présente un premier exemple d'utilisation dans le domaine des télécommunications optiques d'un système de compensation 1 de la distorsion d'un front d'onde conforme à l'invention.
Dans cet exemple purement illustratif, un émetteur SAT - ici un satellite de communication - émet un rayonnement lumineux de transmission d'un message en direction d'une station de base BASE. Le rayonnement lumineux I0 directement émis par le satellite SAT présente une forme régulière, comme cela est représenté dans la partie inférieure de cette figure. Au cours de sa propagation en espace libre, le rayonnement émis I0 est soumis aux perturbations atmosphériques de l'atmosphère PA, si bien que le rayonnement lumineux incident I, arrivant à la station de base BASE, présente des aberrations de phase conduisant à la distorsion de son front d'onde. Ce phénomène affecte la forme du rayonnement incident I, qui prend une forme variable dans le temps, de manière erratique, et irrégulière. On a représenté dans le bas de la figure 1 plusieurs exemples de la forme irrégulière et variable du rayonnement incident I.

En dépit de ce phénomène, on cherche à exploiter dans la station de base BASE le rayonnement incident I par l'intermédiaire d'un receveur optique OR afin de décoder le message transmis. A cet effet, on a prévu un télescope T pour collecter une partie du rayonnement lumineux incident I avec l'éventuelle assistance d'autres éléments optiques tel qu'un miroir orientable M. Le rayonnement lumineux incident I (et plus précisément la partie collectée par le télescope T de ce rayonnement) est dirigé vers le système de compensation 1 de la distorsion du front d'onde. Celui-ci cherche à compenser au moins en partie cette distorsion afin de fournir un rayonnement lumineux dit « utile » I" dont le front d'onde présente une distorsion moindre que celle du rayonnement incident I. Ce rayonnement utile est guidé vers le récepteur optique OR par l'intermédiaire d'une fibre monomode SMF du système de compensation 1.

Dans cet exemple d'application, l'énergie du rayonnement incident I reçue au niveau du télescope T est généralement très faible, notamment parce que la puissance de l'émetteur embarqué dans le satellite SAT est limitée, et à cause des erreurs de pointé, déformation, expansion du faisceau lumineux émis au cours de sa propagation en espace libre. Il est donc important, pour des raisons de bande passante de transmission, que le système de compensation 1 transmette un maximum de l'énergie collectée dans le rayonnement lumineux utile I" pour fournir cette énergie au récepteur OR. La communication optique entre l'émetteur SAT et le récepteur optique OR peut notamment mettre en œuvre une technique de multiplexage en longueur d'onde ou en polarisation. Il est également nécessaire dans cette application que le système de compensation 1 introduise peu de dispersion chromatique ou liée à la polarisation du rayonnement lumineux incident I.

En référence à la figure 3, on présente maintenant un système de compensation 1 pouvant être exploité dans l'exemple d'application de la figure 2 qui vient d'être présenté.

D'une manière très générale, le système de compensation 1 met en œuvre une optique adaptative AO pour compenser au moins en partie la déformation du front d'onde du rayonnement incident I. Cette optique adaptative AO fournit un rayonnement incident corrigé I'. On exploite le rayonnement incident corrigé I' pour établir un rayonnement utile I" que l'on guide à l'aide d'une fibre monomode SMF vers un récepteur optique OR en vue de son exploitation, i.e. ici le décodage du message transmis. Cette préparation du rayonnement utile est mise en œuvre par un séparateur modal 2 qui décompose le rayonnement lumineux corrigé I' en une pluralité de rayonnements de sortie I1-IN, se conformant à une famille de modes cibles, dont on mesure certaines caractéristiques (comme par exemple l'intensité et, éventuellement, la phase). Le séparateur modal 2 est mis en œuvre par un dispositif de conversion de lumière multiplan (MPLC), comme cela sera présenté plus en détail dans la suite de cette description, à base de réflexions/transmissions et de propagations libres du rayonnement. On évite de la sorte l'emploi d'un guide d'onde et des inconvénients liés à cet emploi comme cela a été présenté précédemment. Le séparateur modal 2 est disposé dans une boucle de régulation permettant d'ajuster, en exploitant les caractéristiques mesurées, le déphasage imparti par la surface active S de l'optique adaptative AO au rayonnement lumineux incident I. Cette boucle de régulation vise à maximiser la puissance fournie dans le rayonnement utile I", et comprend, outre le séparateur modal 2, un dispositif photonique 3 qui détermine les caractéristiques d'une partie au moins des rayonnements de sortie I1-IN du séparateur 2, et un contrôleur 4 de l'optique adaptative qui exploite ces caractéristiques pour ajuster l'optique adaptative.

Cette approche est particulièrement avantageuse. Le nombre de rayonnements de sortie I1-IN peut être relativement faible, notamment en comparaison avec une décomposition « en pixels » réalisée par la caméra d'un analyseur de front d'onde de l'état de la technique. En conséquence, les traitements réalisés sur les caractéristiques modales de ces rayonnements sont plus simples à mettre en œuvre et dans un délai plus court, ce qui permet d'améliorer la qualité de la régulation. On peut notamment faire converger et « verrouiller » la régulation dans un mode de fonctionnement où une très grande partie de l'énergie du rayonnement incident I est projetée dans le rayonnement utile I" pour être exploitée par le receveur optique OR. Dans ce mode verrouillé, les variations de forme du rayonnement incident I engendré par les perturbations atmosphériques sont compensées par l'optique adaptative AO, pour en permanence maximiser l'énergie présente dans le rayonnement utile I". On compense de la sorte les variations du front d'onde du rayonnement incident. De plus, les traitements réalisés sur les rayonnements introduisent peu de distorsion chromatique ou liée à la polarisation du rayonnement incident. L'approche est donc parfaitement adaptée aux applications, comme celle de télécommunication prise en exemple, où le contenu spectral ou de polarisation du rayonnement incident doit être préservé. Et selon une caractéristique importante, les éléments assurant la régulation de l'optique adaptative AO sont peu intrusifs, et il est possible d'exploiter une partie importante de l'énergie du rayonnement incident I pour former le rayonnement utile I" fourni au récepteur optique RO.

Revenant à la description de la figure 3, et de manière plus détaillée, le système de compensation 1 comprend donc une optique adaptative AO comportant une surface active S pour recevoir une partie du rayonnement lumineux incident I. La surface active S fournit, par réflexion, un rayonnement lumineux corrigé I'. Comme cela est bien connu, une telle optique adaptative peut correspondre à un miroir déformable dont la surface de réflexion - i.e. la surface active S - peut être localement déformée par des actionneurs mécaniques de manière parfaitement maitrisée. Il peut également s'agir d'un modulateur spatial de lumière (« spatial light modulator » ou SLM selon l'expression anglo-saxonne usuellement employée) dans lequel une matrice de cristaux liquides disposée sur une surface active réfléchissante est commandée pour spatialement modifier son indice de réfraction et ainsi modifier localement la phase du rayonnement réfléchi. Selon une autre variante de mise en œuvre possible, l'optique adaptative est une valve de lumière à réseau (« grating light valve » selon l'expression anglo-saxonne du métier), à une ou deux dimensions.

Quelle que soit la nature de l'optique adaptative choisie, la surface active S de cette optique AO est commandable pour modifier localement la phase du rayonnement qui s'y réfléchit, et cette propriété est exploitée dans le cadre de la présente description pour compenser au moins en partie la déformation du front d'onde du rayonnement incident I, et former donc le rayonnement lumineux corrigé I'. Par souci de simplicité d'expression, on désignera par « déformation de la surface active » la commande de l'optique adaptative AO conduisant à modifier spatialement la phase du rayonnement réfléchi, que cette commande vise à effectivement déformer un miroir ou à modifier l'indice de réfraction d'une matrice de cristaux liquides. On pourra naturellement prévoir que l'optique adaptative AO inclut une pluralité de dispositifs, miroirs déformables ou SLMs par exemple, présentant chacun une surface active S commandable. Ces dispositifs sont alors agencés les uns par rapport aux autres de sorte que le rayonnement incident I se propage et se réfléchisse sur chacune des surfaces actives S. L'optique adaptative AO peut également comprendre d'autres pièces optiques, telles que des miroirs fixes ou orientables, pour guider la propagation du rayonnement lumineux incident I ou corrigé I'.

Poursuivant la description du système de compensation 1 de la figure 3, celui-ci comprend également un séparateur modal 2 disposé dans le chemin de propagation du rayonnement lumineux corrigé I'. Ce séparateur modal 2 reçoit donc, en entrée, le rayonnement lumineux corrigé I'. Il décompose ce rayonnement lumineux spatialement et fournit, en sortie, une pluralité de rayonnements lumineux de sortie I1-IN se conformant à une famille de modes cibles.

Selon un mode de mise en œuvre, un des rayonnements de sortie (I1), désigné rayonnement « principal » constitue le rayonnement utile I" injecté au moins en partie dans la fibre monomode SMF par l'intermédiaire du dispositif photonique 3. Dans ce cas, cette partie du rayonnement lumineux principal I1 est spatialement séparée dans un plan de sortie PS des autres rayonnements lumineux de sortie I2-IN, afin de permettre ce couplage à la fibre monomode. Ce mode de mis en œuvre est illustré sur la figure 3a, dans laquelle on a omis de représenter le circuit photonique 3 pour plus de visibilité. On observe que dans ce mode de mise en œuvre, les rayonnements lumineux de sorties I2-IN autres que le rayonnement principal I1, peuvent spatialement se chevaucher (voir les rayonnements lumineux de sortie de référence I2 et I3 sur la figure). On note qu'il n'est pas nécessaire que tout le rayonnement lumineux principal I1 soit spatialement séparé des autres, et seule une partie de ce rayonnement I1 peut être spatialement séparée et injectée dans la fibre monomode SMF.

Selon un autre mode de mise en œuvre, une pluralité de rayonnements de sortie I1-IN, voire tous les rayonnements de sortie, sont exploités pour former le rayonnement utile I''. A titre d'exemple illustré sur la figure 3b, cette pluralité de rayonnements I1-IN peut être injectée (pour au moins une partie de leur énergie) dans une pluralité de fibres optiques monomodes SMF pour guider ces rayonnements de sortie vers le receveur optique OR et y être collectivement exploités. Dans ce cas, la pluralité de rayonnements guidés par les fibres SMF forme, en combinaison, le rayonnement utile I". Selon un autre exemple, la pluralité de rayonnements de sortie I1-IN peut être recombinée (pour au moins une partie de leur énergie) pour former un rayonnement utile I" se propageant dans une unique fibre monomode vers le receveur optique OR. Dans ce mode de mise en œuvre, les rayonnements lumineux de sortie I1-IN qui sont exploités pour former le rayonnement lumineux utile I" sont avantageusement tous séparés spatialement les uns des autres dans un plan de sortie PS du séparateur modal 2, afin de permettre leur traitement différencié. Cette pluralité de rayonnements lumineux de sortie I1-IN peut correspondre à tous les rayonnements lumineux de sortie I1-IN du séparateur 2.

Selon un mode de mise en œuvre avantageux donc, seule une partie des rayonnements de sortie I1-IN peut être exploitée pour former le rayonnement utile I". On peut alors choisir de décomposer le rayonnement corrigé en un nombre N important de rayonnements de sortie, par exemple 100 ou plus, mais de n'exploiter qu'un nombre réduit de ces rayonnements, par exemple 10 ou 5, afin de limiter la complexité de leurs traitements, par exemple leur recombinaison. Dans certains cas, l'ensemble des rayonnements de sortes peuvent être exploités pour en prendre une mesure (phase et/ou intensité), mais seule une partie exploitée pour leur recombinaison. On note que lorsque le système est bien verrouillé, une partie importante de l'énergie du rayonnement corrigé I' peut être compris dans ce nombre limité de rayonnements de sortie. On peut ainsi prévoir que le nombre de rayonnements de sortie exploité soit 5 fois inférieur ou 10 fois inférieur au nombre total N de de rayonnements de sortie I1-IN.

La séparation modale est avantageusement mise en œuvre par un dispositif de conversion de lumière multiplan, plus communément désigné par les termes anglo-saxons « Multi-Plane Light Converter » (MPLC). Dans un tel mode de mise en œuvre, le rayonnement lumineux corrigé I' subit une succession de réflexions et/ou de transmissions, chaque réflexion et/ou transmission étant suivie par une propagation du rayonnement en espace libre. Certaines au moins des pièces optiques sur lesquelles s'opèrent les réflexions et/ou les transmissions, et qui guident la propagation du rayonnement lumineux corrigé I' dans le séparateur modal 2, présentent des zones microstructurées qui modifie ce rayonnement lumineux.

Par « zones microstructurées » on signifie que la surface de la pièce optique présente sur chacune de ces zones un relief, qui peut par exemple se décomposer sous la forme de « pixels » dont les dimensions peuvent être comprises entre quelques microns à quelques centaines de microns. Il peut s'agir de métasurfaces. Le relief ou chaque pixel de ce relief présente une élévation variable par rapport à un plan moyen définissant la surface en question, d'au maximum quelques microns ou d'au maximum quelques centaines de microns. Quelle que soit la nature de la microstructuration des zones, une pièce optique présentant de telles zones forme un masque de phase introduisant un déphasage local au sein de la section transverse du rayonnement qui s'y réfléchit ou qui s'y transmet.

Ainsi, le rayonnement lumineux qui se propage au sein du séparateur modal 2 subit une succession de déphasages locaux séparés par des propagations. La succession de ces transformations élémentaires (par exemple au moins quatre transformations successives comme par exemple 8, 10, 12, 14, voire au moins 20 transformations) établit une transformation globale du profil spatial du rayonnement. Il est ainsi possible de configurer les zones microstructurées de réflexion ou de transmission pour décomposer et transformer le rayonnement lumineux corrigé I' en une pluralité de rayonnements dits « de sortie », dont on peut très précisément maitriser la disposition spatiale dans un plan de sortie du convertisseur.

On trouvera dans les documents « Programmable unitary spatial mode manipulation », Morizur et Al, J. Opt. Soc. Am. A/Vol. 27, No. 11/November 2010 ; N. Fontaine et Al, (ECOC, 2017),"Design of High Order Mode-Multiplexers using Multiplane Light Conversion"; US9250454 et US2017010463 les fondements théoriques et des exemples de mise en œuvre pratique d'un dispositif MPLC.

Comme cela est présenté dans le détail dans ces documents, les zones microstructurées portées par la ou les pièces optiques formant le séparateur modal 2 sont conçues et configurées pour opérer une conversion modale visant à respectivement transporter la part d'énergie du rayonnement lumineux corrigé I' présent dans une famille de modes dit « d'entrée » vers la famille de modes « cibles ». Il s'agit d'un dispositif passif et dont la fonction de transfert est particulièrement stable et robuste.

A titre d'exemple, la famille des modes d'entrée peut comprendre une base de modes de Hermite-Gauss. Alternativement, on peut choisir une base constituée de modes « irréguliers », c'est-à-dire que la transformée de Fourrier spatiale (dans le plan transverse à la propagation) de chaque mode de la base est distinct du mode lui-même. Ainsi, on peut constituer une famille de modes d'entrée à partir des formes typiques du rayonnement incident I ou du rayonnement corrigé I' mesurées au niveau de l'entrée du séparateur modal 2 : ces formes typiques qui ne peuvent être parfaitement décrites formellement constituent en quelque sorte des catégories type de perturbations atmosphériques traversées par le rayonnement incident I. L'observation de la forme du rayonnement lumineux incident I ou corrigé I' à l'entrée du séparateur modal 2 peut permettre d'identifier ces formes typiques, de les choisir et de les traiter par orthonormalisation pour en faire une base dite « irrégulière » permettant de décomposer tout rayonnement lumineux corrigé I'. On note que, pour cette phase de conception, il est possible de recevoir le rayonnement incident I au niveau de l'entrée du séparateur modal 2, en configurant la surface active S de l'optique adaptative en position « de repos » dans laquelle elle ne modifie pas localement la phase du rayonnement incident I', et le transmet par réflexion sans modification au séparateur 2.

La famille des modes cibles peut être choisie très librement selon la nature des traitements réalisés par le dispositif photonique 3 visant à établir le rayonnement lumineux utile I" et à établir les caractéristiques modales de certains au moins des rayonnements lumineux de sortie I1-IN. Ils peuvent notamment comprendre, par exemple et comme cela sera illustré ultérieurement, une base de modes gaussiens ou une base de modes de Walsh.

D'une manière générale, on cherche à définir des modes cibles qui soient les plus riches et variés possibles : on peut établir de la sorte des caractéristiques modales des rayonnements lumineux de sortie I1-IN qui se conforment à ces modes cibles présentant une grande variété, ce qui facilite la mise en œuvre de la régulation de l'optique adaptative AO. Ainsi, et préférentiellement, on définira les familles de modes pour qu'elles présentent un nombre N de modes au moins égal à 6 modes, et typiquement plusieurs dizaines de modes, et jusqu'à une centaine de modes.

Dans la recherche de modes cibles riches et variés, on pourra notamment prévoir que la famille des modes d'entrée et la famille de modes cibles comprennent chacune au moins deux bases de modes, ces au moins deux bases étant différentes les unes des autres. On augmente de la sorte le nombre N de rayonnements de sortie I1-IN et, surtout, on dispose d'une plus grande variété de modes cibles auxquels les rayonnements de sortie se conforment, ce qui permet d'améliorer la qualité de la régulation, comme on l'a déjà noté. Cette approche peut être mise en œuvre en formant le séparateur modal de deux MPLC recevant chacun une partie du rayonnement corrigé I'.

Dans tous les cas, et quelle que soit la manière avec laquelle le rayonnement lumineux corrigé I' a été traité, on dispose en sortie du séparateur modal 2 d'un nombre N de rayonnement lumineux de sortie I1-IN se conformant respectivement à des modes d'une famille de modes cibles prédéterminés.

Revenant à l'objet général de la présente description, et toujours en référence à la figure 3, un système de compensation 1 conforme à l'invention comprend également un dispositif photonique 3 optiquement couplé au séparateur modal 2 pour recevoir les rayonnements lumineux de sortie I1-IN. On peut prévoir de munir le séparateur modal 2 de fibres optiques pour effectuer ce couplage ou l'assurer par propagation en espace libre. Ce dispositif photonique 3 a une double fonction.

Le dispositif photonique 3 a pour première fonction, on l'a déjà évoqué, de former un rayonnement lumineux utile I'', représentatif du rayonnement lumineux corrigé I', à partir des rayonnements lumineux de sortie I1-IN ou d'une partie d'entre eux. Ce rayonnement utile I'' est destiné à être transmis à un receveur optique OR comme cela a été illustré dans l'exemple de la figure 2, et dans les figures 3a, 3b.

Ainsi, selon une première approche représentée sur la figure 4a, le rayonnement lumineux utile I" est formé d'une partie au moins d'un unique rayonnement lumineux de sortie I1, par exemple celui se conformant au mode fondamental de la famille de modes cibles, typiquement présentant une forme de gaussienne. Ce rayonnement lumineux unique I1 peut être injecté dans une fibre monomode SMF du composant photonique 3, afin de le guider vers le receveur optique OR. On peut prévoir de prélever au niveau du dispositif photonique 2, par exemple par l'intermédiaire d'un séparateur passif de fibre OS de ce dispositif, une partie très réduite de ce rayonnement, afin d'en mesurer les caractéristiques (intensité et/ou phase par exemple) comme cela sera rendu apparent dans la suite de cette description. Alternativement, on peut prévoir que toute l'énergie de ce rayonnement lumineux unique I1 forme le rayonnement lumineux utile I" et soit transmise au receveur optique OR. Dans un tel cas, le séparateur passif de fibre OS de la figure 4a n'est pas nécessaire et on peut prévoir en remplacement, et optionnellement que le receveur optique OR mesure et fournisse, par une voie de retour R représentée sur la figure 2, les caractéristiques modales du rayonnement utile I" ou certaines d'entre elles (l'intensité par exemple).

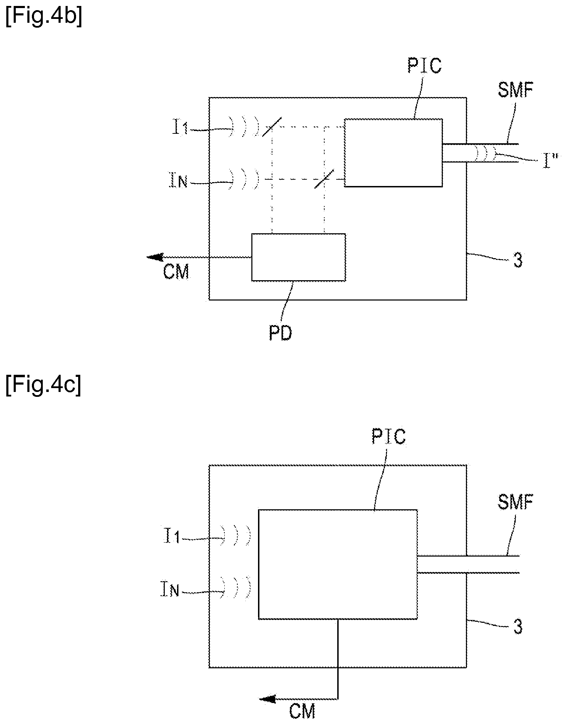

Selon une autre approche représentée sur la figure 4b, le rayonnement utile I'' est formé de la recombinaison des rayonnements de sortie I1-IN ou d'une partie d'entre eux. Cette recombinaison peut être obtenue par un circuit photonique intégré PIC du dispositif photonique 3. Ce circuit photonique PIC, comme cela est bien connu en soi, est configuré pour propager et recombiner les rayonnements lumineux de sortie I1-IN, ou une partie d'entre eux, ainsi que des actuateurs de phase de ces rayonnements permettant d'ajuster leur phase relative et assurer au plus juste cette recombinaison. Le rayonnement utile I" recombinant les rayonnements lumineux de sortie, tout comme dans l'approche précédente, peut être injecté en sortie du dispositif photonique 2 dans une fibre monomode SMF de ce dispositif 2 pour être guidé vers le receveur optique OR et y être exploité. Dans cette approche également, on peut prévoir de prélever une partie très réduite des rayonnements lumineux de sortie, avant leur recombinaison, afin d'en mesurer les caractéristiques (par exemple l'intensité et, éventuellement, la phase). On pourra prévoir dans ce cas des lames semi-réfléchissantes ou tout autre d'élément optique pour prélever la faible portion de ces rayonnements. Alternativement, et selon un mode de mise en œuvre particulier représenté sur la figure 4c, ces mesures ou une partie d'entre elles peuvent être réalisées par le circuit photonique intégré PIC lui-même.

D'autres dispositifs optiques qu'un circuit photonique intégré PIC peuvent être prévus pour réaliser cette recombinaison des rayonnements lumineux de sortie, en complément ou en remplacement de ce circuit. On peut notamment prévoir que cette recombinaison soit mise en œuvre par un ou une pluralité de dispositifs de conversion de lumière multiplan configuré(s) pour réaliser cette recombinaison.

Le dispositif photonique 3 a pour deuxième fonction de traiter une partie au moins des rayonnements lumineux de sortie I1-IN, pour établir et fournir des grandeurs, désignées « caractéristiques modales » CM dans cette demande, représentatives des caractéristiques des rayonnements de sorties, par exemple de l'intensité et/ou, de la phase relative de ces rayonnements ou d'une combinaison de ces rayonnements. D'autres caractéristiques que l'intensité et la phase relative de ces rayonnements I1-IN, ou d'une partie de ceux-ci peuvent être mesurées, par exemple une fréquence de modulation. Mais, de préférence, ces caractéristiques comprennent l'intensité et, éventuellement, la phase des rayonnements lumineux de sortie I1-IN, ou de certains d'entre eux ou d'une combinaison de certains au moins de ces rayonnements. Ces grandeurs ont vocation à être exploitées par le contrôleur 4 de l'optique adaptative AO, afin d'ajuster la déformation de la surface active S de cette optique dans une boucle de régulation visant à compenser la distorsion d'un front d'onde du rayonnement lumineux incident I. On rappelle à ce propos que, d'une manière générale, l'intensité et la phase d'un rayonnement lumineux sont décrites chacune par un champ de grandeurs (ou un unique champ complexe) dans le plan transverse à la propagation du champ. Dans le cas présent, chacun des rayonnements lumineux de sortie I1-IN se conformant à un mode cible d'une famille de mode, l'intensité et la phase relative de chaque rayonnement I1-IN peuvent être représentées, respectivement, par des grandeurs scalaires. Pour ce qui concerne la phase, celle-ci peut être mesurée relativement à un rayonnement lumineux de sortie de référence, par exemple celui correspondant au mode fondamental de la famille de modes, dont la référence par convention est I1.

Dans sa version la plus simple, le dispositif photonique 3 comprend un circuit de mesure PD composé, par exemple, de photodétecteurs permettant de mesurer uniquement l'intensité des rayonnements lumineux de sortie I1-IN sous la forme d'une grandeur électrique. Le circuit de mesure PD peut être fourni sous la forme d'un circuit photonique intégré ou d'une combinaison de circuits discrets. Ce vecteur de mesures peut être fourni au contrôleur 4, sous une forme électrique, telle que mesurée par les photodétecteurs, ou numérique, après conversion. Ces grandeurs d'intensité peuvent être conditionnées par le circuit de mesure PD, par exemple par filtrage et/ou amplification ou toute autre forme de traitement, pour les rendre compatibles avec le contrôleur 4. Il est avantageux dans le cas où seule l'intensité est mesurée (et pas la phase relative), de disposer d'un nombre relativement important de rayonnements lumineux de sortie, par exemple en décomposant le rayonnement lumineux corrigé I' selon plusieurs familles de modes d'entrées et cibles, ainsi que cela a déjà été évoqué. Comme on l'a déjà mentionné également, il n'est pas nécessaire que le circuit de mesure PD établisse une mesure de l'intensité de chacun des rayonnements lumineux de sortie I1-IN. Par exemple dans le cas où un de ces rayonnements est entièrement exploité pour former le rayonnement utile I" propagé par l'intermédiaire du guide d'onde SMF vers le récepteur optique OR, le circuit de mesure PD n'établit alors pas la ou les caractéristiques modales de ce rayonnement lumineux. On peut néanmoins prévoir, et comme on l'a déjà précisé, que cette ou ces caractéristiques soient établies par le récepteur optique OR lui-même, et fournie par l'intermédiaire d'une voie de retour R au dispositif photonique 3 ou au directement au contrôleur 4.

Selon un mode de mise en œuvre particulier du circuit de mesure PD, celui-ci est apte à établir l'intensité et la phase relative des rayonnements lumineux de sortie I1-IN. Ce circuit de mesure établit donc un vecteur de mesures représentatives de l'intensité et de la phase relative des rayonnements lumineux de sortie I1-IN ou d'une partie de ceux-ci. Cela peut être obtenu en mesurant l'intensité, à nouveau par l'intermédiaire par exemple d'un photodétecteur, d'un signal d'interférence des deux rayonnements lumineux sortie dont on souhaite mesurer la phase relative. Mais tout autre circuit de mesure de la phase relative peut convenir.

Selon un autre mode de mise en œuvre particulier déjà évoqué précédemment et représenté sur la figure 4c, les caractéristiques modales (par exemple l'intensité et, éventuellement, la phase des rayonnements lumineux sortie) sont produites par le circuit photonique intégré PIC recombinant certains au moins des rayonnements lumineux de sortie I1-IN. On peut tirer alors profit des actuateurs de phases de ce circuit PIC pour déterminer les caractéristiques modales de phase relative des différents rayonnements.

On note que les caractéristiques modales élaborées par le dispositif photonique 3 ne portent pas nécessairement sur des rayonnements de sorties I1-IN spatialement isolés les uns des autres, et certaines de ces caractéristiques peuvent être obtenues en mesurant des rayonnements de sortie I1-IN qui se chevauchent spatialement dans le plan de mesure.

Un exemple d'une telle configuration est illustré en référence à la figure 5a. Le séparateur modal 3 est ici formé de deux MPLC 3a, 3b. Un séparateur de faisceau BS du séparateur 2 est disposé en amont des deux MPLC 3a, 3b pour fournir une majeure partie 1- ε de l'énergie du rayonnement corrigé au premier MPLC 3a et une partie infime ε de l'énergie de ce rayonnement I' au deuxième MPLC 3b.

Le premier MPLC est configuré pour décomposer la partie du rayonnement incident I' selon une famille de modes de Hermite-Gauss. Deux modes HG1, HG2 sont illustrés sur la figure 5. Ces modes d'entrée sont respectivement transformés par le premier MPLC 3a dans les modes cibles gaussiens G1, G2 formant une famille de modes cibles gaussiens spatialement séparés. Pour plus de visibilité, on a représenté sur deux cartouches C1, C2 séparées la transformation opérée entre la famille de modes d'entrée HG1, HG2 et la famille de modes cibles G1, G2, mais il faut comprendre que ces deux cartouches sont en fait superposées. Il faut également comprendre que seuls deux modes sont ici représentés, mais que plus généralement la transformation est opérée par le premier MPLC3a sur un nombre plus important de modes.

Le deuxième MPLC 3b est quant à lui configuré pour associer respectivement les modes d'une famille de modes d'entrée HG1, HG2 identique à celle du premier MPLC 3a, aux modes W1, W2 d'une famille de modes cibles formée de modes de Walsh. On rappelle que les modes de Walsh sont des modes comportant plusieurs lobes distincts, par exemple des lobes gaussiens. Une famille de modes de Walsh peut être construite à partir d'une distribution de base respectivement multipliée par la fonction de Walsh $W_k(x)$, pour k = 1, 2...N, comme cela est illustré sur la figure 7 dans le cas d'une famille composée de 4 modes W1, W2, W3, W4 (en une dimension dans cette figure, étant entendu que dans le cadre de la demande ces modes s'étendent spatialement). Sur la figure 5, les lobes du premier mode de Walsh W1 et les lobes du deuxième mode de Walsh W2 se superposent. Ces lobes superposés engendrent respectivement des rayonnements lumineux de sortie qui se chevauchent entièrement selon deux lobes spatialement séparés I'1, I'2.

Le dispositif photonique 3 de cet exemple est alors configuré pour injecter les rayonnements lumineux de sortie I1, I2 issu du premier MPLC 3a dans des fibres optiques monomodes afin de les transmettre au récepteur optique OR. Il est également configuré pour mesurer (ici à l'aide d'une pluralité de photo détecteurs PD) et fournir des grandeurs représentatives de chacun des rayonnements lumineux I'1, i'2 respectivement issus des lobes superposés des deux modes de Walsh W1, W2. On pourra notamment mesurer le battement interférométrique qui se produit au niveau du chevauchement des rayonnements lumineux de sortie pour établir une mesure de phase relative entre ces deux rayonnements.

La figure 5b représente une configuration similaire à celle de la figure 6a, mais qui est cette fois mise en œuvre par un unique MPLC mettant en œuvre le séparateur modal 3. Dans cette configuration, le MPLC est conçu à partir d'une famille de modes de Hermite-Gauss HG1, HG2, et d'une famille de supermodes cibles S1, S2. Chaque supermode cible combine un mode gaussien S11, S21 qui collecte une part importante de l'énergie décomposée selon chaque mode d'entrée et d'un mode de Wash S12, S22. Les modes gaussiens S11, S21 des supermodes S1, S2 sont spatialement séparés entre eux et des autres modes S21, S22 des supermodes. Il est donc possible, par l'intermédiaire du dispositif photonique 3 de les injecter dans des fibres optiques monomodes SMF, par exemple pour guider les rayonnements lumineux de sortie I1, I2 qui s'y conforment (et formant le rayonnement lumineux utile) vers le récepteur optique OR ou pour les recombiner. Comme dans l'exemple de la figure 6a, les lobes des modes de Walsh S12, S22 des supermodes se chevauchent entièrement. Les rayonnements lumineux I'1, I'2 qui se conforment respectivement à ces lobes peuvent être traités par le dispositif photonique 3, par exemple par une pluralité de photodétecteurs PD, afin d'en extraire les caractéristiques modales.

Pour résumer, le dispositif photonique 3 prépare donc un rayonnement utile I" qu'il propage par l'intermédiaire d'une fibre optique monomode SMF au récepteur optique OR. A ce propos, on peut prévoir un étage d'amplification A du rayonnement lumineux utile I" afin d'en faciliter l'exploitation par ce récepteur. Le dispositif photonique 3 peut notamment être optiquement couplé, par l'intermédiaire d'une ou d'une pluralité de fibres optiques monomodes à un amplificateur optique du rayonnement lumineux utile I'', par exemple un amplificateur à fibre dopée à l'erbium. Le dispositif photonique 3 prépare et fournit également les caractéristiques modales CM de certains au moins des rayonnements lumineux de sortie I1-IN, ou d'une combinaison de ces rayonnements, ces caractéristiques modales étant fournies au contrôleur 4 de l'optique adaptative AO de la boucle de régulation.

Ce contrôleur 4 peut être mis en œuvre par un calculateur de traitement du signal, par un composant logique programmable (FPGA selon l'acronyme anglosaxon généralement utilisé) ou par tout autre dispositif présentant une puissance de calcul suffisante. Il est configuré matériellement ou par logiciel pour, à partir des caractéristiques modales CM, ajuster la déformation de la surface active S, dans la boucle de régulation visant par exemple à maximiser la puissance présente dans le rayonnement lumineux utile I''. C'est notamment le cas lorsque ce rayonnement lumineux utile I" est formé d'un unique rayonnement lumineux de sortie (ou d'une partie de celui-ci), par exemple celui I1 associé au mode cible fondamental de la famille de modes cibles. Dans ce cas, le traitement mis en œuvre par le contrôleur 4 peut également viser à minimiser la puissance présente dans les autres rayonnements lumineux de sortie I2-IN. La minimisation de la puissance présente dans ces autres rayonnements peut également former le critère de régulation de l'optique adaptative lorsqu'aucune caractéristique modale du rayonnement lumineux utile I" n'est disponible. Cela peut notamment être le cas lorsque le rayonnement lumineux utile I" est formé de toute l'énergie du rayonnement de sortie I1 et que le receveur optique ne fournit pas, par la voie de retour R, de caractéristiques modales du rayonnement utile.

A titre d'exemple, le traitement mis en œuvre par le contrôleur pour réaliser cette étape d'optimisation peut se fonder sur une méthode de gradient, sur une méthode stochastique, sur un interpolateur configuré par apprentissage, par exemple un réseau de neurones, sur un interpolateur configuré par logique floue, ou des méthodes plus conventionnelles de régulation" par exemple de Kahlman, adaptative ou robuste mettant en œuvre l'élaboration d'un modèle d'état du système régulé, fixe ou déterminé en temps réel par identification.

Selon un mode de mis en œuvre particulièrement intéressant visant à enrichir les données de régulation, notamment lorsque que l'on cherche à élaborer un modèle temps réel du système régulé, l'optique adaptative AO est commandée, par exemple par le contrôleur 4 ou par le dispositif photonique 3, pour appliquer une déformation déterminée temporaire à la surface active S. Il peut s'agir par exemple d'appliquer une déformation à cette surface S consistant en un biais de phase constant, spatialement, au rayonnement incident I. Il peut s'agir alternativement d'un biais de phase présentant un profil déterminé, qui peut être choisi aléatoirement ou non. Ce biais de phase appliqué temporairement, pendant une période déterminée, sur le rayonnement corrigé I' affecte les caractéristiques modales CM des rayonnements lumineux de sortie I1-IN au cours de la période pendant laquelle il est appliqué. Le dispositif photonique 3 est dans ce cas configuré pour mesurer les grandeurs représentatives des intensités et/ou des phases relatives des rayonnements lumineux de sortie I' produits avec (pendant la période où la déformation est appliquée à l'optique adaptative AO) et sans la déformation temporaire de la surface active S (avant ou après cette période). Le dispositif photonique 3 est dans ce cas également configuré pour combiner ces caractéristiques modales CM dans un vecteur de mesure enrichi, qui peut être fourni au contrôleur 4 en vue d'améliorer la qualité de la régulation.

Lorsque l'on dispose à la fois des grandeurs représentatives de l'intensité et de la phase relatives des rayonnements lumineux de sortie I1-IN, le contrôleur 4 peut être configuré pour déterminer, à partir de ces caractéristiques modales CM, la phase du front d'onde de la partie du rayonnement lumineux corrigé I'. En effet, ces informations sont suffisantes pour permettre de reconstituer le champ électromagnétique transverse formant le rayonnement lumineux corrigé I', car la transformation effectuée par le séparateur modal 2 est entièrement déterminée par le choix des familles de modes d'entrée et cibles. De ce champ électromagnétique transverse, on peut extraire le front d'onde du rayonnement lumineux corrigé I' et donc sa distorsion, par exemple sous la forme d'une matrice de valeurs scalaires dont la résolution correspond à la résolution de déformation de l'optique adaptative AO. Il est alors aisé de déterminer, selon cette approche déterministe, l'ajustement de la déformation de la surface active S de l'optique adaptative AO compensant cette distorsion.

En référence à la figure 6, on présente un deuxième exemple d'utilisation dans le domaine de l'imagerie médicale d'un système de compensation 1 de la distorsion d'un front d'onde conforme à l'invention. Dans cette application, on vise à corriger des aberrations optiques de l'œil, i.e. des inhomogénéités d'indice de l'œil, en mettant en œuvre une technologie de tomographie par cohérence optique.

Dans l'illustration de la figure 6, on souhaite imager le fond d'un œil OE. A cet effet le système ophtalmologique comprend une source lumineuse SO, typiquement à faible cohérence et par exemple à base de diodes superluminescentes. Le rayonnement lumineux produit par cette source est guidé, selon une première voie, vers un dispositif de balayage B, comprenant ici deux miroirs mobiles et un ensemble de lentilles, permettant de balayer le fond de l'œil en vue de l'imager. Une optique adaptative OA est disposée sur le chemin optique séparant la source SO et l'œil OE. Le rayonnement incident I produit par la source se réflechit sur ce fond d'œil et sur l'optique adaptative pour fournir un rayonnement corrigé I' et être dirigé vers un détecteur OR. Le front d'onde du rayonnement réfléchi I' vers le détecteur présente un front d'onde dont le profil a été affecté par les inhomogénéités d'indice de l'œil. Il présente donc une distorsion variable dans le temps selon le point visé par le dispositif de balayage B.

Le rayonnement lumineux produit est également guidé, par l'intermédiaire d'un séparateur de faisceau BS, selon une seconde voie dite de référence vers un miroir Mref dont la position est ajustable, et le rayonnement de référence réfléchi IR est également dirigé vers le détecteur OR.

Comme cela est bien établi dans le domaine, le rayonnement incident réfléchi I' et le rayonnement de référence réfléchi IR se combinent au niveau du détecteur OR pour interférer (en ajustant pour cela la position du miroir ajustable Mref de la voie de référence) et cette interférence permet d'imager le fond de l'œil inspecté.

Dans le système ophtalmologique de la figure 6, on a également prévu, dans la première voie, un système de compensation de la distorsion du front d'onde du rayonnement lumineux incident réfléchi, conforme à l'invention.

Ce système reprend toutes les caractéristiques du système de compensation exposé en référence à la figure 3. Le rayonnement lumineux corrigé I' est notamment séparé modalement par le séparateur modal 2 et les caractéristiques modales des rayonnements lumineux de sorties sont mesurées par le dispositif photonique 3 pour contrôler la déformation d'une surface active de l'optique adaptative AO. Au moins un des rayonnements lumineux de sortie est exploité pour former le rayonnement utile I'' destiné à interférer avec le rayonnement réfléchi de référence au niveau du détecteur. Celui-ci forme un récepteur optique OR permettant de détecter la position d'interférence du miroir de référence Mref et, dans cette application, d'imager le fond d'un œil OE, en compensant au moins en partie la distorsion créée par la dispersion d'indice de cet œil.

Dans une alternative à la configuration représentée sur la figure 6, la source pourrait aussi être constituée d'un laser accordable dont la longueur d'onde est scannée sur toute une plage pour mesurer des franges spectrales d'interférence caractéristiques du fond de l'œil pour chacune des positions du faisceau. Il n'est plus nécessaire de disposer du miroir Mref, et le séparateur BS peut être un séparateur fibré.

On comprend donc plus généralement qu'un système de compensation 1 conforme à l'invention peut être exploité pour compenser la distorsion créée sur un rayonnement lumineux par son milieu de propagation. Ce milieu n'est nullement limité à l'atmosphère dans des applications de transmission en espace libre. Il peut notamment s'agir d'un milieu humide, par exemple pour des transmissions sous-marines, ou par un tissu biologique dans les applications médicales, comme celle présentée brièvement ci-dessus. Le système peut également trouver une application dans le domaine de la microscopie, notamment du type confocal ou non linéaire.

Bien entendu l'invention n'est pas limitée aux modes de mise en œuvre décrits et on peut y apporter des variantes de réalisation sans sortir du cadre de l'invention tel que défini par les revendications.

Ainsi, bien que l'on ait décomposé les traitements effectués sur le rayonnement lumineux corrigé I' selon une architecture comprenant le séparateur modal 2, le dispositif photonique 3 et le contrôleur 4, il est bien entendu que d'autres architectures réalisant des traitements identiques sont possibles. On peut notamment prévoir que le dispositif photonique 3 et le contrôleur 4 soit intégrés l'un à l'autre pour former un unique dispositif. D'une manière plus générale, certaines fonctions associées (pour simplifier l'exposé) à un dispositif particulier peuvent être réalisés par un autre dispositif, sans que ce choix de conception n'écarte le système dans son ensemble de l'invention, telle que celle-ci est définie par les revendications.

Les modes du séparateur modal 2 gaussiens et de Walsh pris en exemple ne sont donnés qu'à titre d'illustration. On pourrait choisir d'autres modes que ceux de Gauss pour constituer la famille de modes d'entrée et d'autres modes que ceux de Walsh pour constituer la famille de modes de sortie. Il peut ainsi s'agir d'une collection de modes de sortie, dit de Hadamard généralisés, correspondant à une transformée des modes d'entrée fondée sur une matrice de Hadamard complexe. Il peut par exemple s'agir d'une transformée de Fourier discrète des modes d'entrée. Ainsi, pour le j-ème mode d'entrée (parmi N modes d'entrée), le mode de sortie associé peut être constitué de N lobes, par exemple des lobes gaussiens, pour lesquels la phase du k-ème lobe est égale à :

$$\phi_{j,k} = \frac{2\pi j k}{N}.$$

On note pour finir que le système de compensation 1 peut également être utile pour caractériser des perturbations du milieu, par exemple de nature atmosphérique lorsque l'application implique une transmission en espace libre. Dans ce cas, l'optique adaptative n'est pas mise en œuvre, et le séparateur modal reçoit donc le rayonnement incident I non corrigé. Les caractéristiques modales établies par le dispositif photonique 3 forment dans ce cas une signature du rayonnement incident, en particulier de sa forme. Cette signature peut être sauvegardée pour former une bibliothèque de signatures de perturbations atmosphériques. Une telle bibliothèque peut être exploitée à titre scientifique ou technologique, par exemple pour définir une typologie de perturbations atmosphériques.

**Revendications**

1. Système de compensation (1) de la distorsion d'un front d'onde d'une partie au moins d'un rayonnement lumineux incident (I), le système de compensation comprenant une optique adaptative (AO) comportant une surface active (S) configurée pour recevoir la partie du rayonnement lumineux incident (I) et pour fournir, par réflexion sur la surface active (S), un rayonnement lumineux corrigé (I'), le système de compensation étant **caractérisé en ce qu'**il comprend de plus :

   - un séparateur modal (2) disposé dans le chemin de propagation du rayonnement lumineux corrigé (I') configuré pour fournir une pluralité de rayonnements lumineux de sortie (I1-IN) se conformant à une famille de modes cibles, le séparateur modal comprenant une pluralité de zones microstructurées disposées sur au moins un élément optique configuré pour intercepter et modifier spatialement le rayonnement lumineux corrigé (I'), au cours d'une pluralité de réflexions ou de transmission sur la pluralité de zones microstructurées séparées par une propagation libre ;

   - un dispositif photonique (3) optiquement couplé au séparateur modal (2), le dispositif photonique (3) étant configuré pour fournir :

      i. un rayonnement lumineux dit « utile » (I") représentatif du rayonnement lumineux corrigé (I') à partir des rayonnements lumineux de sortie (I1, IN), le rayonnement lumineux utile (I") étant notamment destiné à être transmis à un receveur optique (OR) ;
      ii. des grandeurs, désignées « caractéristiques modales » (CM), représentatives des caractéristiques des rayonnements lumineux de sortie (I1-IN);

   - Un contrôleur (4) de l'optique adaptative (AO), relié au dispositif photonique (3) et à l'optique adaptative (AO), le contrôleur (4) étant configuré pour, à partir des caractéristiques modales (CM), ajuster la déformation de la surface active (S).

2. Système de compensation (1) selon la revendication précédente dans lequel le rayonnement lumineux utile (I") correspond à une partie au moins d'un unique rayonnement lumineux de sortie (I1), cette partie étant spatialement séparée des autres rayonnements lumineux de sortie (I2-IN).

3. Système de compensation (1) selon la revendication 1 dans lequel le rayonnement lumineux utile (I") comprend une pluralité de rayonnements lumineux de sortie (I1).

4. Système de compensation (1) selon la revendication précédente dans lequel le dispositif photonique (3) est configuré pour recombiner une partie au moins des rayonnements lumineux de sortie (I1-IN) pour former le rayonnement lumineux utile (I").

5. Système de compensation (1) selon la revendication précédente dans lequel la recombinaison d'une partie au moins des rayonnements lumineux de sortie (I1-IN) est réalisée par au moins un dispositif de conversion de lumière multiplan.

6. Système de compensation (1) selon la revendication 4 dans lequel la recombinaison d'une partie au moins des rayonnements lumineux de sortie (I1-IN) est réalisée par un circuit intégré photonique (PIC).

7. Système de compensation (1) selon l'une des revendications précédentes dans lequel le dispositif photonique (3) comprend au moins une fibre optique monomode (SMF) et est configuré pour y injecter le rayonnement lumineux utile (I'').

8. Système de compensation (1) selon l'une des revendications précédentes dans lequel le dispositif photonique (3) comprend une pluralité de photodétecteurs (PD) configurée pour mesurer l'intensité et, optionnellement la phase relative, d'une partie au moins de la pluralité de rayonnements lumineux de sortie (I1-IN), la pluralité de photodétecteurs fournissant certaines au moins des caractéristiques modales (CM).

9. Système de compensation (1) selon l'une des revendications précédentes dans lequel les caractéristiques modales (CM) comprennent les grandeurs représentatives de l'intensité et de la phase relative des rayonnements lumineux de sortie (I1-IN) et le contrôleur (4) est configuré pour déterminer, à partir des caractéristiques modales (CM), la phase du front d'onde de la partie du rayonnement lumineux corrigé (I').

10. Système de compensation (1) selon l'une des revendications 1 à 7 dans lequel le contrôleur (4) met en œuvre un traitement visant à maximiser la puissance transmise dans le rayonnement lumineux utile (I'').

11. Système de compensation (1) selon l'une des revendications précédentes dans laquelle la famille des modes cibles comprend une base de modes gaussiens et/ou une base de modes de Walsh et/ou de Hadamard généralisés.

12. Système de compensation (1) selon l'une des revendications précédentes dans lequel le séparateur modal (2) comprend une pluralité de dispositifs de conversion de lumière multiplan.

13. Système de compensation (1) selon l'une des revendications précédentes dans lequel l'optique adaptative (AO) est commandée pour appliquer une déformation déterminée temporaire à la surface active (S), et les caractéristiques modales (CM) combinent les grandeurs représentatives des caractéristiques des rayonnements lumineux de sortie (I') produits avec et sans la déformation temporaire de la surface active (S).

14. Système de compensation (1) selon l'une des revendications précédentes dans lequel le dispositif photonique (3) est optiquement couplé à un amplificateur optique du rayonnement lumineux utile (I'').

15. Système de communication optique mettant en œuvre un système de compensation selon l'une des revendications précédentes dans lequel la communication optique met en œuvre une technique de multiplexage en longueur d'onde et/ou en polarisation.

**Patentansprüche**

1. System zur Kompensation (1) der Verzerrung einer Wellenfront mindestens eines Teils einer einfallenden Lichtstrahlung (I), wobei das Kompensationssystem eine adaptive Optik (AO) mit einer aktiven Fläche (S) umfasst, die so konfiguriert ist, dass sie den Teil der einfallenden Lichtstrahlung (I) empfängt und durch Reflexion an der aktiven Fläche (S) eine korrigierte Lichtstrahlung (I') bereitstellt, wobei das Kompensationssystem **dadurch gekennzeichnet ist, dass** es ferner umfasst:

   - einen Modensplitter (2), der im Ausbreitungsweg der korrigierten Lichtstrahlung (I') angeordnet ist und so konfiguriert ist, dass er eine Vielzahl von Ausgangslichtstrahlungen (11-IN) bereitstellt, die einer Familie von Zielmoden entsprechen, wobei der Modensplitter eine Vielzahl von mikrostrukturierten Zonen umfasst, die auf mindestens einem optischen Element angeordnet sind, das so konfiguriert ist, dass es die korrigierte Lichtstrahlung (I') während einer Vielzahl von Reflexionen oder Transmission an die Vielzahl von durch freie Ausbreitung getrennten mikrostrukturierten Zonen abfängt und räumlich modifiziert;
   - eine photonische Vorrichtung (3), die mit dem Modensplitter (2) optisch gekoppelt ist, wobei die photonische Vorrichtung (3) so konfiguriert ist, dass sie Folgendes bereitstellt:

      i. eine so genannte "nutzbare" Lichtstrahlung (I''), die repräsentativ für die korrigierte Lichtstrahlung (I') auf der Basis von Ausgangslichtstrahlungen (I1, IN) ist, wobei die nutzbare Lichtstrahlung (I'') insbesondere zur Übertragung an einen optischen Empfänger (OR) bestimmt ist;
      ii. Größen, die als "Modalcharakteristiken" (CM) bezeichnet werden und die repräsentativ für Charakteristiken der Ausgangslichtstrahlungen (I1-IN) sind;

   - eine Steuerung (4) der adaptiven Optik (AO), die mit der photonischen Vorrichtung (3) und der adaptiven Optik (AO) verbunden ist, wobei die Steuerung (4) so konfiguriert ist, dass sie auf der Basis der Modalcharakteristiken (CM) die Deformation der aktiven Fläche (S) anpasst.

2. Kompensationssystem (1) nach dem vorstehenden Anspruch, wobei die nutzbare Lichtstrahlung (I") mindestens einem Teil einer einzelnen Ausgangslichtstrahlung (I1) entspricht, wobei dieser Teil räumlich von den anderen Ausgangslichtstrahlungen (I2-IN) getrennt ist.

3. Kompensationssystem (1) nach Anspruch 1, wobei die nutzbare Lichtstrahlung (I") eine Vielzahl von Ausgangslichtstrahlungen (I1) umfasst.

4. Kompensationssystem (1) nach dem vorstehenden Anspruch, wobei die photonische Vorrichtung (3) so konfiguriert ist, dass sie mindestens einen Teil der Ausgangslichtstrahlungen (I1-IN) zum Bilden der nutzbaren Lichtstrahlungen (I") rekombiniert.

5. Kompensationssystem (1) nach dem vorstehenden Anspruch, wobei die Rekombination mindestens eines Teils der Ausgangslichtstrahlungen (I1-IN) durch mindestens eine mehrdimensionale Lichtumwandlungsvorrichtung erfolgt.

6. Kompensationssystem (1) nach Anspruch 4, wobei die Rekombination mindestens eines Teils der Ausgangslichtstrahlungen (I1-IN) durch einen photonischen integrierten Schaltkreis (PIC) erfolgt.

7. Kompensationssystem (1) nach einem der vorstehenden Ansprüche, wobei die photonische Vorrichtung (3) mindestens eine optische Singlemode-Faser (SMF) umfasst und so konfiguriert ist, dass sie die nutzbare Lichtstrahlung (I") in diese injiziert.

8. Kompensationssystem (1) nach einem der vorstehenden Ansprüche, wobei die photonische Vorrichtung (3) eine Vielzahl von Fotodetektoren (PD) umfasst, die so konfiguriert sind, dass sie die Intensität und optional die relative Phase von mindestens einem Teil der Vielzahl von Ausgangslichtstrahlungen (I1-IN) messen, wobei die Vielzahl von Fotodetektoren mindestens einige der Modalcharakteristiken (CM) bereitstellt.

9. Kompensationssystem (1) nach einem der vorstehenden Ansprüche, wobei die Modalcharakteristiken (CM) die Größen umfassen, die für die Intensität und die relative Phase der Ausgangslichtstrahlungen (11-IN) repräsentativ sind, und die Steuerung (4) so konfiguriert ist, dass sie auf der Basis der Modalcharakteristiken (CM) die Phase der Wellenfront des korrigierten Teils der Lichtstrahlung (I') bestimmt.

10. Kompensationssystem (1) nach einem der Ansprüche 1 bis 7, wobei die Steuerung (4) eine Verarbeitung implementiert, die darauf abzielt, die in der nutzbaren Lichtstrahlung (I") übertragene Leistung zu maximieren.

11. Kompensationssystem (1) nach einem der vorstehenden Ansprüche, wobei die Zielmodenfamilie eine Basis von Gaußschen Moden und/oder eine Basis von generalisierten Walsh- und/oder Hadamard-Moden umfasst.

12. Kompensationssystem (1) nach einem der vorstehenden Ansprüche, wobei der Modensplitter (2) eine Vielzahl von mehrdimensionalen Lichtumwandlungsvorrichtungen umfasst.

13. Kompensationssystem (1) nach einem der vorstehenden Ansprüche, wobei die adaptive Optik (AO) so gesteuert wird, dass sie eine bestimmte temporäre Deformation der aktiven Fläche (S) vornimmt, und die Modalcharakteristiken (CM) die repräsentativen Größen der Charakteristiken der mit und ohne die temporäre Deformation der aktiven Fläche (S) erzeugten Ausgangslichtstrahlungen (I') kombinieren.

14. Kompensationssystem (1) nach einem der vorstehenden Ansprüche, wobei die photonische Vorrichtung (3) optisch mit einem optischen Verstärker der nutzbaren Lichtstrahlung (I") gekoppelt ist.

15. Optisches Kommunikationssystem, das ein Kompensationssystem nach einem der vorstehenden Ansprüche implementiert, wobei die optische Kommunikation eine Wellenlängen- und/oder Polarisationsmultiplextechnik implementiert.

**Claims**

1. System (1) for compensating for the distortion of a wavefront of at least a portion of an incident light beam (I), the compensation system comprising adaptive optics (AO) having an active surface (S) which is configured to receive the portion of the incident light beam (I) and to provide, by way of reflection from the active surface (S), a corrected light beam (I'), the compensation system being **characterized in that** it further comprises:

   - a mode splitter (2) which is disposed in the propagation path of the corrected light beam (I') and is configured to provide a plurality of output light beams (11-IN) conforming to a family of target modes, the mode splitter comprising a plurality of microstructured zones disposed on at least one optical element which is configured to intercept and spatially modify the corrected light beam (I') during a plurality of reflections or transmission from the plurality of microstructured zones which are separated by a free propagation;
- a photonic device (3) which is optically coupled to the mode splitter (2), the photonic device (3) being configured to provide:

    i. on the basis of the output light beams (I1, IN), a so-called "useful" light beam (I") which is representative of the corrected light beam (I'), the useful light beam (I") being intended in particular to be transmitted to an optical receiver (OR);
    ii. quantities, referred to as "mode characteristics" (CM), which are representative of the characteristics of the output light beams (11-IN);

    - a controller (4) for controlling the adaptive optics (AO), said controller (4) being connected to the photonic device (3) and to the adaptive optics (AO) and being configured to, on the basis of the mode characteristics (CM), adjust the deformation of the active surface (S).

2. Compensation system (1) according to the preceding claim, wherein the useful light beam (I") corresponds to at least a portion of a single output light beam (I1), this portion being spatially separated from the other output light beams (I2-IN).

3. Compensation system (1) according to claim 1, wherein the useful light beam (I") comprises a plurality of output light beams (I1).

4. Compensation system (1) according to the preceding claim, wherein the photonic device (3) is configured to recombine at least some of the output light beams (I1-IN) in order to form the useful light beam (I").

5. Compensation system (1) according to the preceding claim, wherein said recombining of at least some of the output light beams (11-IN) is carried out by at least one multi-plane light conversion device.

6. Compensation system (1) according to claim 4, wherein said recombining of at least some of the output light beams (I1-IN) is carried out by a photonic integrated circuit (PIC).

7. Compensation system (1) according to any of the preceding claims, wherein the photonic device (3) comprises at least one single-mode optical fiber (SMF) and is configured to inject the useful light beam (I") into said optical fiber.

8. Compensation system (1) according to any of the preceding claims, wherein the photonic device (3) comprises a plurality of photodetectors (PD) which are configured to measure the intensity, and optionally the relative phase, of at least some of the plurality of output light beams (11-IN), the plurality of photodetectors providing at least some of the mode characteristics (CM).

9. Compensation system (1) according to any of the preceding claims, wherein the mode characteristics (CM) comprise the quantities which are representative of the intensity and the relative phase of the output light beams (I1-IN), and the controller (4) is configured to determine, on the basis of the mode characteristics (CM), the phase of the wavefront of the portion of the corrected light beam (I').

10. Compensation system (1) according to any of claims 1 to 7, wherein the controller (4) implements processing aimed at maximizing the power transmitted in the useful light beam (I").

11. Compensation system (1) according to any of the preceding claims, wherein the family of target modes comprises a basis of Gaussian modes and/or a basis of generalized Walsh and/or Hadamard modes.

12. Compensation system (1) according to any of the preceding claims, wherein the mode splitter (2) comprises a plurality of multi-plane light conversion devices.

13. Compensation system (1) according to any of the preceding claims, wherein the adaptive optics (AO) are controlled so as to apply a temporary determined deformation to the active surface (S), and the mode characteristics (CM) combine the quantities which are representative of the characteristics of the output light beams (I') produced with and without the temporary deformation of the active surface (S).

14. Compensation system (1) according to any of the preceding claims, wherein the photonic device (3) is optically coupled to an optical amplifier for optically amplifying the useful light beam (I").

15. Optical communication system implementing a compensation system according to any of the preceding claims, wherein the optical communication implements a wavelength multiplexing and/or polarization multiplexing technique.

[Fig.1]

[Fig.2]

[Fig.3]

[Fig.3a]

[Fig.3b]

[Fig.4a]

[Fig.4b]

[Fig.4c]

EP 4 302 148 B1

[Fig.5a]

[Fig.5b]

[Fig.6]

[Fig.7]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9250454 B

- US 2017010463 A

**Littérature non-brevet citée dans la description**

- Alternative passive fiber coupling system based on MPLC for satellite to ground conversion. *Free space laser communication XXXII*, 09 March 2020, 25
- **NORRIS, B.R.M.** ; **WEI, J.** ; **BETTERS, C.H. et al.** An all-photonic focal-plane wavefront sensor. *Nat Commun*, 2020, vol. 11, 5335

- Simultaneous Turbulence mitigation and mode demultiplexing using one MPLC in a Two-Mode 200-Gbit/s Free-Space OAM-Multiplexed Link. *2020 OPTICAL FIBER COMMUNICATIONS CONFERENCE AND EXHIBITION (OFC), OSA*, 08 March 2020, 1-3
- **MORIZUR et al.** Programmable unitary spatial mode manipulation. *J. Opt. Soc. Am. A*, November 2010, vol. 27 (11)
- **N. FONTAINE et al.** Design of High Order Mode-Multiplexers using Multiplane Light Conversion. ECOC, 2017